# EUROPEAN PATENT SPECIFICATION

(11) **EP 4 265 886 B1**
(45) Date of publication and mention of the grant of the patent: **03.12.2025**
(21) Application number: 22168987.0
(22) Date of filing: 20.04.2022
(51) Int. Cl.: F01D 5/00, F01D 21/00

(54) **CONTINUOUS FLOW ENGINE MAINTENANCE SCHEDULING AND PROGNOSIS SYSTEM**
PLANUNGS- UND PROGNOSESYSTEM ZUR WARTUNG VON KONTINUIERLICHEN STRÖMUNGSMASCHINEN
SYSTÈME DE PLANIFICATION ET DE PRONOSTIC DE L'ENTRETIEN DES MOTEURS À ÉCOULEMENT CONTINU

(43) Date of publication of application: 25.10.2023
(73) Proprietor: Siemens Energy Global GmbH & Co. KG, 81739 München (DE)
(72) Inventor: Slottner, Pontus, 60119 Norrköping (SE)

(56) References cited:
- EP-A1- 3 944 885
- EP-A1- 3 945 385

## Description

The present method refers to a method of servicing a continuous flow engine. Furthermore, the present invention refers to a computer program product including instructions operable to cause a computing entity to execute an inventive method. Additionally, the present invention refers to a storage device for providing an inventive computer program product.

For example, EP3945385 A1 refers to a continuous flow engine monitoring method providing an evaluation with regard to required maintenance actions and reviewing possibilities based on a simplified and broadened insight in a plurality of components and related characteristics.

Continuous flow engines are very important and highly sophisticated devices utilized in modern industry. Despite the long period of prior use they are still subject to constant improvement intending to further broaden their utilization and/or further improve benefits provided herewith. Herein, especially the extreme flexibility to adapt the use of such continuous flow engine to current demands render such continuous flow engines not being able to be replaced yet also suffering from corresponding requirements constantly increasing based on other insufficiencies of interrelated elements in the corresponding system. For example, in the field of power generation the continuous flow engines like gas turbines have to compensate for renewable energy sources like wind power and solar power providing fluctuations to be compensated. This, however, increase the strain and wear out of corresponding continuous flow engines requiring to constantly improve the means and methods to service such engines.

This and further problems are solved by the products and methods as disclosed hereafter and in the claims. Further beneficial embodiments are disclosed in the dependent claims and the further description and figures. These benefits can be used to adapt the corresponding solution to specific needs or to solve additional problems.

According to one aspect the present invention refers to a method of servicing a continuous flow engine,
wherein the continuous flow engine is utilized to generate power based on a fluid stream running through said continuous flow engine or compresses a fluid stream running through the continuous flow engine,
wherein the continuous flow engine contains a plurality of components,
the method contains a step of acquiring a component maintenance list,
wherein the component maintenance list specifies components to be serviced during the next maintenance or overhaul, wherein the method contains a step of identifying at least one interrelated component of the continuous flow engine containing retrieving data from a component database and identifying physically or functionally interrelated components, wherein the method contains a step of evaluating a benefit of including the at least one interrelated component in such maintenance or overhaul,
wherein the evaluation takes into account a failure mode, wherein the failure mode takes into account a probability of replacement, a probability of failure, a probability of non-reparability or a combination of said probabilities,
wherein the evaluation takes into account a physical assembly structure of the continuous flow engines and includes an reduced amount of effort based on additional effort taking into account the required disassembly and assembly of the continuous flow engine based on the component maintenance list, wherein the method contains a step of providing a list of at least one interrelated component beneficially being additionally serviced during the next maintenance or overhaul. Utilizing the inventive method allows to surprisingly significantly improve the servicing of continuous flow engines. Other industrial devices provide significantly lower requirements with regard to downtimes or an excess of spare parts taken along such service task. However, for such continuous flow engines typically no replacements are available and an prolonged downtime of, for example, a gas turbine required to compensate the fluctuating energy production of renewable energy resources might endanger the safety of a complete electrical grid. Simultaneously, the components utilized in such continuous flow engines like blades and vanes are very costly and spreading a huge amount of such components being in the end not required over a plurality of servicing sites was difficult and is expected to become impossible based on very specific optimized components utilized to extend the limits of such continuous flow engines. Especially, interrelated components being identified during normal servicing to be beneficially simultaneously replaced pose a significant challenge. Even for standardized continuous flow engines it is difficult for experts with decade long experience to predict all such cases. For the further expected more specific adaption of the very specific continuous flow engines to further increase the benefit it will become even more difficult or even impossible to make such assessment by experience alone. Thus, the present invention providing an automatic solution to optimize the spare part management on site will be required to optimize the current servicing and solve the upcoming needs of the industry. Providing an output containing additionally to be included components to prevent a prolongation of the downtimes without requiring manual interaction.

The phrase "to service a component" as used herein refers to a defined interaction step like a replacement, a repair or a check of its state. Typically, it is preferred that it refers to replacing or repairing such component.

The acquisition of the component maintenance list can be merely a retrieval of a predefined list of components of a continuous flow engine to be serviced at a given time. However, it is preferred according to many applications to add some components being expected to be serviced for the specific continuous flow engine. For example, based on historic data of comparable or identical continuous flow engines or the expertise of an expert. Herein, such list is not limited to the components that are definitely to be replaced. Typically, it is preferred that the component maintenance list contains components that are definitely to be serviced and that are likely to be required to be serviced. The skilled person is well aware how to select such components likely to be required to be serviced based on his experience and/or historic data acquired over decades of collected experience.

The phrase "probability of replacement" as used herein refers to the probability of a replacement of the corresponding component being required at a specified time. Preferably, such probability of replacement is determined based on historic data containing the state and replacement time of identical or similar components. For example, corresponding databases are acquired by collecting corresponding data over long time during servicing corresponding continuous flow engines. Herein, the corresponding data is, for example, associated to a certain runtime of the continuous flow engine. Based on such data a corresponding probability of replacement can be determined for a specific component and a given time. However, it is also possible to alternatively or additionally utilize simulations to determine a wear out of the corresponding component and accordingly determine the probability of replacement. Especially, utilization of such simulations is a very beneficial methods to provide corresponding insight. For example, it can be preferred that the probability of replacements is based on an evaluation of a wear out limit and/or a crack evaluation. For example, such crack evaluation can be based on the length of the crack, the shape of the crack, and/or the direction of the crack. Based on such information it is possible to predict with high reliability the possibility of failure during the subsequent utilization and, fast, predict the probability of replacement thereafter.

The phrase "probability of failure" as used herein refers to the probability of failure of the corresponding component at a specified time causing the continuous flow engine to become inoperable, wherein such states preferably cannot be restored without manual interaction or even results in the continuous flow engine to be not become irreparable. While it is possible to deduct such probability from comparison with historic data, is typically preferred to utilize simulations that make use of historic data to predict the future development of such component. Although, it is also possible to utilize models to create such simulations it was noted that utilizing such historic data is beneficial for typical embodiments. For example, it allows to significantly reduce the processing power of the utilized computer system without losing reliability and detailed insight. It is assumed that the significant benefit to include simulations in this context is based on the new possibilities that arose during recent time based on improved materials, designs and possibilities to monitor such continuous flow engines providing increased strain and formerly less often observed situations resulting in a significant benefit to include such simulations for such probabilities. Herein, such simulations can be surprisingly well utilized which is assumed to be based on the good applicability of corresponding models to continuous flow engines being utilized in a very flexibly manner yet still being utilized in a way providing a wear out being easy to evaluated and simulated. This is especially important in the present case as the inventive method requires an evaluation of a plurality of interrelated components requiring a good balance of required processing power and reliable detail information acquired herewith. It is surprisingly noted that the inventive method can be utilized for continuous flow engines with available computer hardware and software despite the theoretically required calculations to exhaustively simulate such complex systems.

The phrase "probability of non-reparability" as used herein refers to the probability of the corresponding component to be irreparably damaged. While the remaining parts of the device might still be functioning the corresponding component in question in such case is subject to wear that neither be tolerated, removed nor decreased to restore operability. According to a further aspect the present invention refers to a computer program product, tangibly embodied in a machine-readable storage medium, including instructions operable to cause a computing entity to execute an inventive method. According to a further aspect the present invention refers to a storage device for providing an inventive computer program product, wherein the device stores the computer program product and/or provides the computer program product for further use.

A further non-claimed aspect of the present disclosure refers to a measurement device adapted to be utilized during maintenance or overhaul of a continuous flow engine based on a component maintenance list being adapted according to an inventive method,
wherein the measurement device is adapted to collect data regarding components being reviewed during the maintenance or overhaul,
wherein the measurement device is adapted to forward the collected data to a database to further adapt a list of components to be serviced during the maintenance or overhaul utilizing the method according to any of claims 8 to 10.

A further non-claimed aspect of the present disclosure refers to a use of an inventive measurement device during maintenance or overhauling of a continuous flow engine.

To simplify understanding of the present invention it is referred to the detailed description hereafter and the figures attached as well as their description. Herein, the figures are to be understood being not limiting the scope of the present invention, but disclosing preferred embodiments explaining the invention further.

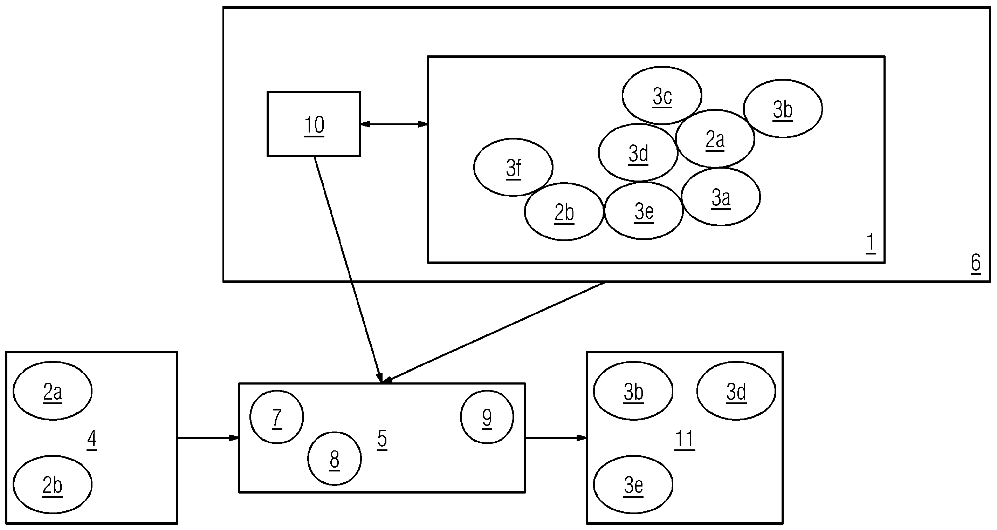

Fig. 1 shows a scheme of an inventive method being realized. Preferably, the embodiments hereafter contain, unless specified otherwise, at least one processor and/or data storage unit to implement the inventive method.

Unless specified otherwise terms like "calculate", "process", "determine", "generate", "configure", "reconstruct" and comparable terms refer to actions and/or processes and/or steps modifying data and/or creating data and/or converting data, wherein the data are presented as physical variable or are available as such.

The term "data storage" or comparable terms as used herein, for example, refer to a temporary data storage like RAM (Random Access Memory) or long term data storage like hard drives or data storage units like CDs, DVDs, USB sticks and the like. Such data storage can additionally include or be connected to a processing unit to allow a processing of the data stored on the data storage.

In the following the invention will be exemplarily refer to continuous flow engines like gas turbines. It was noted that the application of the invention in such area was especially beneficial. Corresponding continuous flow engines are, for example, typically utilized as base power providing units in a power generation and distribution network additionally having to handle the fluctuations resulting from the inhomogeneous power generation resulting from renewable energy.

According to one aspect the present invention refers to a method as described above.

According to further embodiments it is preferred that the probability of replacement is determined utilizing historic data and simulated data. It was noted that combining historic data and simulated data is especially useful to acquire the corresponding information for continuous flow engines with a very good balance of processing power and accuracy.

According to further embodiments it is preferred that the evaluation takes into account the failure probability, wherein the failure probability is at least partially determined using simulations of the wear out of the at least one interrelated component. It was noted that determination of the failure probability can be improved in typical application cases by including simulation of the wear out of the at least one interrelated component. Utilizing the acquired experience and operating conditions of continuous flow engines allows a very detailed and reliable simulation of such wear out. Simultaneously, the required processing power is surprisingly limited enabling to provide a plurality of wear out simulations to be utilized. These simulations enable to further improve the failure probability, wherein the additional effort is typically easily overcompensated by the improved insight acquired.

According to further embodiments it is preferred that the at least one interrelated component are components being adapted to contact the fluid stream during utilization of the continuous flow engine. It was noted that the servicing of continuous flow engines, especially gas turbines, is typically very beneficially improved by adapting the servicing of corresponding components accordingly. It was noted that the combination of available historic data for such components as well as the deep insight available enabling to reliably simulate the wear out of such components with reasonable processing power allows to surprisingly efficiently make use of the inventive method for such components.

According to further embodiments it is preferred that the component maintenance list and the at least one interrelated components contains at least one plurality of an identical component, wherein a step of evaluating a benefit of including the at least one interrelated components in such maintenance or overhaul includes an adaption factor based on the total number of the at least one plurality of the identical component,
wherein the adaption factor increases the benefit of including the at least one interrelated components in such maintenance or overhaul. It was noted that such simple adaption of the benefit evaluation allows to include a practical observation of typical application benefitting from adding a slight excess of corresponding components beyond the theoretically expected value.

According to further embodiments it is preferred that the method contains utilizing of a priority factor, wherein the method contains the utilizing the priority factor,
wherein the priority factor is automatically provided based on a historic database containing data of components serviced in past servicing of continuous flow engines and/or received from an interface adapted to be utilized by an operator, wherein the priority factor increases the benefit of including the evaluated spare part in the list. While the generic method as disclosed above already provides a highly reliable assessment it was noted that a further improvement can be achieved by including past experiences and/or the expertise of an expert. Herein, such priority factor can especially be utilized as relative factor proportionally increasing the benefit or as absolute increase of such determined benefit. Allowing to, for example, simply specifying some priority factor of the required value to render the component being part of the list. The analysis of the historic database can be based on a comparison of current assessment and past required components to be serviced under comparable conditions additionally making use of notes and comments regarding observations during such past servicing. It was noted that this enables to very easy include practical deviations, for example, resulting from owners of such continuous flow engines handling their continuous flow engines in a specific way putting an increased stress upon certain components wearing them out faster.

According to further embodiments it is preferred that the effort value additionally includes adapting the additional effort based on an interrelated component already being identified to be additionally serviced during the next maintenance or overhaul. Utilizing the inventive method and especially embodiments as described herein requiring a very efficient use of processing power allows to run several loops and/or include the dependency of the evaluation taking into account additionally serviced interrelated components. For example, taking into account an additionally included servicing interrelated component in the component maintenance list and the resulting changes of the service action can easily render the servicing of further component beneficial. Typically, it is in this context preferred to additionally take into account the physical assembly structure. For example, according to certain embodiments a reevaluation of interrelated components is executed based on a combination of failure mode exceeding a predefined value and an interrelation based on the physical assembly structure.

According to further embodiments it is preferred that the step of identifying at least one interrelated component contains retrieving component data from a component database, preferably a remote database. For example, such remote database can also be provided as distributed database. Typically, it is preferred to utilize a remote database. While a local database is theoretically beneficial it was noted that it is surprisingly beneficial to maintain the possibility to continuously adapt the corresponding data regarding interrelated components. It is assumed that observed benefits of corresponding adaption in this context are based on the changes resulting to the continuous changes of components, upgrades and new insights also based on new types of operation in the field of continuous flow engine. Thus, new dependencies can be identified without rendering the former data incorrect. The continuous improvements in this field merely render it surprisingly beneficial to include such updates.

According to further embodiments it is preferred that the step of evaluating a benefit of including the at least one interrelated components in such maintenance or overhaul contains a downtime simulation,
wherein the downtime simulation includes simulating the potential reduction of downtime of the continuous flow engine based on potentially including the at least one interrelated component in the list of components to be serviced during the next maintenance or overhaul.

According to further embodiments it is preferred that the method contains the step of adapting a list of interrelated components beneficially being additionally serviced during the next maintenance or overhaul based on data acquired during during said next maintenance or overhaul to include an additional component or leave out a component included in the list of interrelated components beneficially being additionally serviced during the next maintenance or overhaul. It was noted that continuously adapted such list even during such maintenance or overhaul allows to even further increase the benefit of such method. Typically, it is preferred to provide a defined measurement device being continuously or on demand being connected to a database, wherein the observed state of the components during maintenance or overhaul is uploaded. This enables to further adapt such maintenance and take care of unexpected situations based on, for example, unknown increased strain resulting from not communicated utilization beyond an accepted limit. As it is typically to allowed to continuously or at least look up detailed data regarding the use of such continuous flow engine in advance significant deviations beyond a certain limit render corresponding adaptions beneficial.

According to further embodiments it is preferred that the evaluation takes into account the failure probability, wherein the failure probability is at least partially determined utilizing at least one historic failure database, wherein the historic failure database contains data regarding a historic wear out of a plurality of similar or identical components. It was noted that available historic databases are able to provide surprising benefits to determine the failure probability. Herein, it is assumed that especially human related influences differing from simulation taking into account ideal processes are beneficially taken into account.

According to further embodiments it is preferred Method according to any of the aforementioned claims, wherein the evaluation takes into account the failure probability, wherein the failure probability is at least partially determined using simulations of the wear out of the at least one interrelated component. Simultaneously, it was noted that simulating the wear out of an interrelated component is a very effective tool to provide such failure probability. Even using simulations alone allows to very effectively optimize the servicing of continuous flow engines utilizing the inventive method. Typically, it is especially beneficial to combine simulated and historic data to provide a further significantly improved insight to be utilized. It is assumed that the benefit obtained herewith is based on the combination of highly specific simulation and more difficult to impossible to be simulated human factor.

According to a further aspect the present invention refers to a computer program product, tangibly embodied in a machine-readable storage medium, including instructions operable to cause a computing entity to execute an inventive method.

According to a further aspect the present invention refers to a storage device for providing an inventive computer program product, wherein the device stores the computer program product and/or provides the computer program product for further use.

A further non-claimed aspect refers to a measurement device adapted to be utilized during maintenance or overhaul of a continuous flow engine based on a component maintenance list being adapted according to an inventive method,
wherein the measurement device is adapted to collect data regarding components being reviewed during the maintenance or overhaul,
wherein the measurement device is adapted to forward the collected data to a database to further adapt a list of components to be serviced during the maintenance or overhaul utilizing an inventive method.

A further non-claimed aspect refers to a use of an inventive measurement device during maintenance or overhauling of a continuous flow engine.

The following detailed description of the figure uses the figure to discuss illustrative embodiments, which are not to be construed as restrictive, along with the features and further advantages thereof.

Figure 1 shows a scheme of an inventive method being realized. Herein, the method is applied to a gas turbine 1 being an example of a continuous flow engine. The gas turbine 1 is utilized in the power generation industry and provides a highly sophisticated method to generate power with a very flexible method. In this context, a fluid stream is created inside the gas turbine based on burning a fluid utilizing multiple burners.

Such gas turbine consists of a plurality of components required to enabling the gas turbine 1 to run. Even the components providing the hot gas patch being in contact with the fluid stream consists of such plurality of components, wherein the extremely straining conditions of such hot gas path provide a tremendous strain of such components. For example, said hot gas path contains the components 2a, 2b to be serviced according to the maintenance list as well as components 3a, 3b, 3c, 3d, 3e, 3f being interrelated to said components 2a, 2b.

According to the inventive method the processing unit 5 retrieves data from a component maintenance list 4. Said component maintenance list 4, for example, lists components 2a, 2b to be included in the next maintenance or overhaul. The processing 5 retrieves data from a component database 6 containing data regarding the gas turbine 1 and its components 2a, 2b, 3a, 3b, 3c, 3d, 3e, 3f. Utilizing said data the processing unit 5 identifies physically or functionally interrelated components 3a, 3b, 3c, 3d, 3e, 3f being interrelated to the components 2a, 2b.

Taking into account a failure mode based on a probability of replacement 7, a probability of failure 8, a probability of non-reparability 9 and combinations of said probabilities the processing unit 5 evaluates the benefit of including interrelated components 3a, 3b, 3c, 3d, 3e, 3f in an upcoming maintenance or overhaul. In this context, the processing unit 5 retrieves data 10 regarding the physical assembly structure from the component database 6. Herein, the risks are correlated to the required effort to service the component 3a, 3b, 3c, 3d, 3e, 3f in question during the upcoming maintenance or overhaul or at a later time before the subsequent maintenance or overhaul. For example, it is evaluated whether the risk of failure of a component 3a, 3b, 3c, 3d, 3e, 3f is too high taking into account the significant effort in case it has to be replaced between scheduled maintenance or overhaul actions. Or it is evaluated whether the risk of the combination of a probability of replacement 7, a probability of failure 8, a probability of non-reparability 9 is low enough to not include it in the upcoming maintenance or overhaul based on the low effort required to service said component based on physically interrelated components 2a, 2b to be removed from the gas turbine 1 based on the planned maintenance or overhaul anyway.

Herein, historic data and simulated data is utilized to determine the failure mode. For example, the taking into account the most recent data available the current state of the interrelated components 3a, 3b, 3c, 3d, 3e, 3f is simulated and the related probabilities are determined. Furthermore, the overall current state of specific parts of the gas turbine 1 is determined taking into account past measurement and past operating data. Relevant historic data is determined to identify past observations and services included during prior maintenance or overhaul indicating deviations from simulated situations. For example, an early replacement of components might not be based on mere wear out, but on difficulties to service interrelated components without replacing these components too. For example, components that are to be removed to allow servicing that might suffer from damages during such actions like springs and bolts. For example, a historic failure database is utilized containing time series data regarding the measured state of components, operating conditions of the gas turbine and components failing during the operation. It was noted that including such historic database is very beneficial for typical applications.

An operator utilizing the inventive method is able to specify a number of loops being not shown in figure 1. For example, it can be specified to run three loops, wherein a first evaluation indicates interrelated components 3b, 3d additionally to be serviced. Based on the additionally serviced interrelated components 3b, 3d the evaluation of different interrelated components has to be adapted. For example, based on additional interrelated components 3b, 3d to be serviced it may become beneficial to service a whole group of components 2a, 2b, 3b, 3d, 3e. Introducing such loops is surprisingly beneficial. For example, it might overall be beneficial to service a complete aggregate of components 2a, 2b, 3a, 3b, 3c, 3d, 3e, 3f as it provides an overall reduction on the downtime based on simulations taking into account multiple maintenance or overhaul actions being scheduled.

Based on the evaluation the processing unit 5 provides a list 11 of additionally to be serviced interrelated components 3b, 3d, 3e that should be included in the next maintenance or overhaul.

For example, such list 11 can also be selected to contain all components 2a, 2b, 3a, 3b, 3c, 3d, 3e, 3f providing an overall probability of 95% that every required component 2a, 2b, 3a, 3b, 3c, 3d, 3e, 3f that would be required to be replaced during the next maintenance or overhaul is available during such step. Such probability assessment allows to significantly reduce the risk that even untrained personal being required to prepare the required spare parts do not include required components 2a, 2b, 3a, 3b, 3c, 3d, 3e, 3f during the preparations.

Additionally, the inventive method can be utilized to provide the additional costs in case components 2a, 2b, 3a, 3b, 3c, 3d, 3e, 3f not being included in the spare parts provided for such maintenance or overhaul are required to be shipped at an increased speed or even extra downtime is required to finish the maintenance or overhaul.

Herein, the method is not static and can even be rerun during the maintenance or overhaul. Typically, it is preferred to utilize an inventive measurement device allowing to directly acquire additional data. Such additional data may indicate that the state of parts of the gas turbine differs from the expected state. Resulting in further components 3a, 3b, 3c, 3d, 3e, 3f to be beneficially serviced. Such information can be directly forwarded to a central storage facility directly triggering delivering additional spare sparts to the corresponding facility as well as informing the service personal about such additional steps to be executed.

The present invention was only described in further detail for explanatory purposes. However, the invention is not to be understood being limited to these embodiments as they represent embodiments providing benefits to solve specific problems or fulfilling specific needs. The scope of the protection should be understood to be only limited by the claims attached.

## Claims

1. Method of servicing a continuous flow engine,
wherein the continuous flow engine is utilized to generate power based on a fluid stream running through said continuous flow engine or compresses a fluid stream running through the continuous flow engine,
wherein the continuous flow engine contains a plurality of components,
wherein the method contains a step of acquiring a component maintenance list (4),
wherein the component maintenance list (4) specifies components (2a, 2b) to be serviced during the next maintenance or overhaul,
**characterized by** that the method contains a step of identifying at least one interrelated component (3a, 3b, 3c, 3d, 3e, 3f) of the continuous flow engine containing retrieving data from a component database (6) and identifying physically or functionally interrelated components,
wherein the method contains a step of evaluating a benefit of including the at least one interrelated component (3a, 3b, 3c, 3d, 3e, 3f) in such maintenance or overhaul,
wherein the evaluation takes into account a failure mode, wherein the failure mode takes into account a probability of replacement (7), a probability of failure (8), a probability of non-reparability (9) or a combination of said probabilities,
wherein the evaluation takes into account a physical assembly structure (10) of the continuous flow engines and includes an reduced amount of effort based on additional effort taking into account the required disassembly and assembly of the continuous flow engine based on the component maintenance list (4),
wherein the method contains a step of providing a list of the at least one interrelated component (3a, 3b, 3c, 3d, 3e, 3f) beneficially being additionally serviced during the next maintenance or overhaul.

2. Method according to any of the aforementioned claim, wherein the probability of replacement (7) is determined utilizing historic data and simulated data.

3. Method according to any of the aforementioned claims, wherein the evaluation takes into account the failure probability,
wherein the failure probability is at least partially determined using simulations of the wear out of the at least one interrelated component.

4. Method according to any of the aforementioned claims, wherein the at least one interrelated component (3a, 3b, 3c, 3d, 3e, 3f) are components being adapted to contact the fluid stream during utilization of the continuous flow engine.

5. Method according to any of the aforementioned claims, wherein the method contains the utilizing a priority factor, wherein the priority factor is automatically provided based on a historic database containing data of components serviced in past servicing of continuous flow engines and/or received from an interface adapted to be utilized by an operator, wherein the priority factor increases the benefit of including the evaluated spare part in the list.

6. Method according to any of the aforementioned claims, wherein the effort value additionally includes adapting the additional effort based on an interrelated component (3a, 3b, 3c, 3d, 3e, 3f) already being identified to be additionally serviced during the next maintenance or overhaul.

7. Method according to any of the aforementioned claims, wherein the step of evaluating a benefit of including the at least one interrelated component (3a, 3b, 3c, 3d, 3e, 3f) in such maintenance or overhaul contains a downtime simulation, wherein the downtime simulation includes simulating the potential reduction of downtime of the continuous flow engine based on potentially including the at least one interrelated component (3a, 3b, 3c, 3d, 3e, 3f) in the list of components (2a, 2b) to be serviced during the next maintenance or overhaul.

8. Method according to any of the aforementioned claims, wherein the method contains the step of adapting a list (11) of the at least one interrelated component (3a, 3b, 3c, 3d, 3e, 3f) beneficially being additionally serviced during the next maintenance or overhaul based on data acquired during said next maintenance or overhaul to include an additional component or leave out a component included in the list (11) of the at least one interrelated component (3a, 3b, 3c, 3d, 3e, 3f) beneficially being additionally serviced during the next maintenance or overhaul.

9. Method according to any of the aforementioned claims, wherein the evaluation takes into account the failure probability,
wherein the failure probability is at least partially determined utilizing at least one historic failure database, wherein the historic failure database contains data regarding a historic wear out of a plurality of similar or identical components.

10. Method according to any of the aforementioned claims, wherein the evaluation takes into account the failure probability,
wherein the failure probability is at least partially determined using simulations of the wear out of the at least one interrelated component.

11. Computer program product, tangibly embodied in a machine-readable storage medium, including instructions operable to cause a computing entity to execute a method according to any of claims 1 to 10.

12. Storage device for providing a computer program product according to claim 11, wherein the device stores the computer program product and/or provides the computer program product for further use.

## Patentansprüche

1. Verfahren zum Warten eines Motors mit kontinuierlicher Strömung,
wobei der Motor mit kontinuierlicher Strömung genutzt wird, um Leistung basierend auf einem Fluidstrom, der durch den Motor mit kontinuierlicher Strömung fließt, zu generieren, oder einen Fluidstrom, der durch den Motor mit kontinuierlicher Strömung fließt, zu verdichten,
wobei der Motor mit kontinuierlicher Strömung eine Vielzahl von Komponenten enthält,
wobei das Verfahren einen Schritt des Erlangens einer Komponentenwartungsliste (4) enthält,
wobei die Komponentenwartungsliste (4) Komponenten (2a, 2b) spezifiziert, die während der nächsten Wartung oder Überholung zu warten sind,
**dadurch gekennzeichnet, dass** das Verfahren einen Schritt des Identifizierens von mindestens einer in Wechselbeziehung stehenden Komponente (3a, 3b, 3c, 3d, 3e, 3f) des Motors mit kontinuierlicher Strömung enthält, der Abrufen von Daten aus einer Komponentendatenbank (6) und Identifizieren von physisch oder funktional in Wechselbeziehung stehenden Komponenten enthält,
wobei das Verfahren einen Schritt des Bewertens eines Vorteils des Einbeziehens der mindestens einen in Wechselbeziehung stehenden Komponente (3a, 3b, 3c, 3d, 3e, 3f) bei einer derartigen Wartung oder Überholung enthält,
wobei die Bewertung einen Ausfallmodus berücksichtigt, wobei der Ausfallmodus eine Wahrscheinlichkeit von Austausch (7), eine Wahrscheinlichkeit von Ausfall (8), eine Wahrscheinlichkeit der Nicht-Reparierbarkeit (9) oder eine Kombination der Wahrscheinlichkeiten berücksichtigt,
wobei die Bewertung eine physische Baugruppenstruktur (10) der Motoren mit kontinuierlicher Strömung berücksichtigt und einen reduzierten Aufwand basierend auf zusätzlichem Aufwand, der das erforderliche Auseinanderbauen und Zusammenbauen des Motors mit kontinuierlicher Strömung berücksichtigt, basierend auf der Komponentenwartungsliste (4) beinhaltet,
wobei das Verfahren einen Schritt des Bereitstellens einer Liste der mindestens einen in Wechselbeziehung stehenden Komponente (3a, 3b, 3c, 3d, 3e, 3f), die zum Vorteil während der nächsten Wartung oder Überholung zusätzlich gewartet wird, enthält.

2. Verfahren nach einem des vorhergehenden Anspruchs, wobei die Wahrscheinlichkeit von Austausch (7) unter Nutzung von historischen Daten und simulierten Daten bestimmt wird.

3. Verfahren nach einem der vorhergehenden Ansprüche, wobei die Bewertung die Ausfallwahrscheinlichkeit berücksichtigt, wobei die Ausfallwahrscheinlichkeit mindestens teilweise unter Verwendung von Simulationen des Verschleißes der mindestens einen in Wechselbeziehung stehenden Komponente bestimmt wird.

4. Verfahren nach einem der vorhergehenden Ansprüche, wobei die mindestens eine in Wechselbeziehung stehende Komponente (3a, 3b, 3c, 3d, 3e, 3f) Komponenten sind, die dazu ausgelegt sind, den Fluidstrom während Nutzung des Motors mit kontinuierlicher Strömung zu berühren.

5. Verfahren nach einem der vorhergehenden Ansprüche, wobei das Verfahren das Nutzen eines Prioritätsfaktors enthält, wobei der Prioritätsfaktor automatisch basierend auf einer historischen Datenbank, die Daten von Komponenten enthält, die bei zurückliegenden Wartungen von Motoren mit kontinuierlicher Strömung gewartet wurden, bereitgestellt wird und/oder von einer Schnittstelle empfangen wird, die dazu ausgelegt ist, durch einen Benutzer genutzt zu werden, wobei der Prioritätsfaktor den Vorteil des Einbeziehens des bewerteten Ersatzteils in der Liste erhöht.

6. Verfahren nach einem der vorhergehenden Ansprüche, wobei der Aufwandswert zusätzlich Anpassen des zusätzlichen Aufwands basierend auf einer in Wechselbeziehung stehenden Komponente (3a, 3b, 3c, 3d, 3e, 3f), die bereits identifiziert wurde, um bei der nächsten Wartung oder Überholung zusätzlich gewartet zu werden, beinhaltet.

7. Verfahren nach einem der vorhergehenden Ansprüche, wobei der Schritt des Bewertens eines Vorteils des Einbeziehens der mindestens einen in Wechselbeziehung stehenden Komponente (3a, 3b, 3c, 3d, 3e, 3f) bei einer derartigen Wartung oder Überholung eine Ausschaltzeitsimulation enthält, wobei die Ausschaltzeitsimulation Simulieren der potenziellen Reduzierung von Ausschaltzeit des Motors mit kontinuierlicher Strömung basierend auf potenziellem Einbeziehen der mindestens einen in Wechselbeziehung stehenden Komponente (3a, 3b, 3c, 3d, 3e, 3f) in der Liste von Komponenten (2a, 2b), die während der nächsten Wartung oder Überholung zu warten sind, beinhaltet.

8. Verfahren nach einem der vorhergehenden Ansprüche, wobei das Verfahren den Schritt des Anpassens einer Liste (11) der mindestens einen in Wechselbeziehung stehenden Komponente (3a, 3b, 3c, 3d, 3e, 3f), die zum Vorteil während der nächsten Wartung oder Überholung zusätzlich gewartet wird, basierend auf Daten, die während der nächsten Wartung oder Überholung erlangt werden, enthält, um in die Liste (11) der mindestens einen in Wechselbeziehung stehenden Komponente (3a, 3b, 3c, 3d, 3e, 3f), die zum Vorteil während der nächsten Wartung oder Überholung zusätzlich gewartet wird, eine zusätzlich Komponente einzubeziehen oder eine Komponente, die in dieser beinhaltet ist, auszulassen.

9. Verfahren nach einem der vorhergehenden Ansprüche, wobei die Bewertung die Ausfallwahrscheinlichkeit berücksichtigt, wobei die Ausfallwahrscheinlichkeit mindestens teilweise unter Nutzung mindestens einer historischen Ausfalldatenbank bestimmt wird, wobei die historische Ausfalldatenbank Daten in Bezug auf einen historischen Verschleiß einer Vielzahl von ähnlichen oder identischen Komponenten enthält.

10. Verfahren nach einem der vorhergehenden Ansprüche, wobei die Bewertung die Ausfallwahrscheinlichkeit berücksichtigt, wobei die Ausfallwahrscheinlichkeit mindestens teilweise unter Verwendung von Simulationen des Verschleißes der mindestens einen in Wechselbeziehung stehenden Komponente bestimmt wird.

11. Computerprogrammprodukt, das physisch in einem maschinenlesbaren Speichermedium verkörpert ist und Anweisungen beinhaltet, die dazu betreibbar sind, eine Rechenentität dazu zu veranlassen, ein Verfahren nach einem der Ansprüche 1 bis 10 auszuführen.

12. Speichervorrichtung zum Bereitstellen eines Computerprogrammprodukts nach Anspruch 11, wobei die Vorrichtung das Computerprogrammprodukt speichert und/oder das Computerprogrammprodukt zur weiteren Verwendung bereitstellt.

## Revendications

1. Procédé d'entretien d'un moteur à flux continu,
dans lequel le moteur à flux continu est utilisé pour générer de l'énergie sur la base d'un flux de fluide traversant ledit moteur à flux continu ou comprime un flux de fluide traversant le moteur à flux continu,
dans lequel le moteur à flux continu contient une pluralité de composants,
dans lequel le procédé contient une étape d'acquisition d'une liste de maintenance de composants (4),
dans lequel la liste de maintenance des composants (4) spécifie les composants (2a, 2b) à entretenir lors de la prochaine maintenance ou révision,
**caractérisé en ce que** le procédé comprend une étape d'identification d'au moins un composant interdépendant (3a, 3b, 3c, 3d, 3e, 3f) du moteur à flux continu contenant la récupération de données à partir d'une base de données de composants (6) et l'identification de composants interdépendants physiquement ou fonctionnellement,
dans lequel le procédé contient une étape d'évaluation d'un avantage d'inclure au moins un composant interdépendant (3a, 3b, 3c, 3d, 3e, 3f) dans une telle maintenance ou révision,
dans lequel l'évaluation prend en compte un mode de défaillance, dans lequel le mode de défaillance prend en compte une probabilité de remplacement (7), une probabilité de défaillance (8), une probabilité de non-réparabilité (9) ou une combinaison desdites probabilités,
dans lequel l'évaluation prend en compte une structure d'assemblage physique (10) des moteurs à flux continu et comprend une quantité d'effort réduite basée sur un effort supplémentaire prenant en compte le démontage et l'assemblage requis du moteur à flux continu sur la base de la liste de maintenance de composants (4),
dans lequel le procédé contient une étape consistant à fournir une liste d'au moins un composant interdépendant (3a, 3b, 3c, 3d, 3e, 3f) devant être avantageusement entretenu en plus lors de la prochaine maintenance ou révision.

2. Procédé selon l'une quelconque des revendications précédentes, dans lequel la probabilité de remplacement (7) est déterminée à l'aide de données historiques et de données simulées.

3. Procédé selon l'une quelconque des revendications précédentes, dans lequel l'évaluation prend en compte la probabilité de défaillance,
dans lequel la probabilité de défaillance est au moins partiellement déterminée à l'aide de simulations de l'usure d'au moins un composant interdépendant.

4. Procédé selon l'une quelconque des revendications précédentes, dans lequel les au moins un composant interdépendant (3a, 3b, 3c, 3d, 3e, 3f) sont des composants adaptés pour entrer en contact avec le flux de fluide pendant l'utilisation du moteur à flux continu.

5. Procédé selon l'une quelconque des revendications précédentes, dans lequel le procédé contient l'utilisation d'un facteur de priorité, dans lequel le facteur de priorité est automatiquement fourni sur la base d'une base de données historique contenant des données de composants entretenus lors d'entretiens passés de moteurs à flux continu et/ou reçues d'une interface adaptée pour être utilisée par un opérateur, dans lequel le facteur de priorité augmente l'avantage d'inclure la pièce de rechange évaluée dans la liste.

6. Procédé selon l'une quelconque des revendications précédentes, dans lequel la valeur d'effort comprend en outre l'adaptation de l'effort supplémentaire sur la base d'un composant interdépendant (3a, 3b, 3c, 3d, 3e, 3f) déjà identifié pour être entretenu en plus lors de la prochaine maintenance ou révision.

7. Procédé selon l'une quelconque des revendications précédentes, dans lequel l'étape d'évaluation d'un avantage d'inclure l'au moins un composant interdépendants (3a, 3b, 3c, 3d, 3e, 3f) dans une telle maintenance ou révision contient une simulation de temps d'arrêt, dans lequel la simulation de temps d'arrêt comprend la simulation de la réduction potentielle du temps d'arrêt du moteur à flux continu sur la base de l'inclusion potentielle de l'au moins un composant interdépendant (3a, 3b, 3c, 3d, 3e, 3f) dans la liste de composants (2a, 2b) à entretenir lors de la prochaine maintenance ou révision.

8. Procédé selon l'une quelconque des revendications précédentes, dans lequel le procédé comprend l'étape consistant à adapter une liste (11) de l'au moins un composant interdépendant (3a, 3b, 3c, 3d, 3e, 3f) devant être avantageusement entretenu en plus lors de la prochaine maintenance ou révision sur la base de données acquises lors de ladite prochaine maintenance ou révision pour inclure un composant supplémentaire ou omettre un composant inclus dans la liste (11) de l'au moins un composant interdépendant (3a, 3b, 3c, 3d, 3e, 3f) devant être avantageusement entretenu en plus lors de la prochaine maintenance ou révision.

9. Procédé selon l'une quelconque des revendications précédentes, dans lequel l'évaluation prend en compte la probabilité de défaillance,
dans lequel la probabilité de défaillance est au moins partiellement déterminée en utilisant au moins une base de données de défaillances historiques, la base de données de défaillances historiques contenant des données concernant une usure historique d'une pluralité de composants similaires ou identiques.

10. Procédé selon l'une quelconque des revendications précédentes, dans lequel l'évaluation prend en compte la probabilité de défaillance,
dans lequel la probabilité de défaillance est au moins partiellement déterminée à l'aide de simulations de l'usure de l'au moins un composant interdépendant.

11. Produit de programme informatique, incorporé de manière tangible dans un support de stockage lisible par machine, comprenant des instructions pouvant être utilisées pour amener une entité informatique à exécuter un procédé selon l'une quelconque des revendications 1 à 10.

12. Dispositif de stockage pour fournir un produit de programme informatique selon la revendication 11, dans lequel le dispositif stocke le produit de programme informatique et/ou fournit le produit de programme informatique pour une utilisation ultérieure.
